# EUROPÄISCHE PATENTSCHRIFT

(11) **EP 1 980 354 B1**
(45) Veröffentlichungstag und Bekanntmachung des Hinweises auf die Patenterteilung: **29.12.2010**
(21) Anmeldenummer: 07014003.3
(22) Anmeldetag: 17.07.2007
(51) Int. Cl.: B23K 10/02

(54) **Verfahren zum Plasma-Stichlochschweißen**
Method for plasma keyhole welding
Procédé pour soudage en bouchon au moyen de plasma

(30) Priorität: 12.04.2007 DE 102007017224; 12.04.2007 DE 102007017223
(43) Veröffentlichungstag der Anmeldung: 15.10.2008
(73) Patentinhaber: Linde AG, 80331 München (DE)
(72) Erfinder: Wilhelm, Gerald, 86551 Aichach (DE)

(56) Entgegenhaltungen:
- EP-A1- 0 689 896
- DE-A1- 10 354 409
- JP-A- 8 039 259
- JP-A- 8 066 774

## Beschreibung

Die vorliegende Erfindung betrifft ein Verfahren zum Plasma-Stichlochschweißen bei dem eine nichtabschmelzende und von einem Plasmabrenner konzentrisch umgebene Elektrode eingesetzt wird, wobei über den Plasmabrenner zumindest ein Plasmagas und ein Schutzgas zugeführt werden, wobei durch lonisation des Plasmagases mit Hilfe eines Pilotlichtbogens oder einer Hochfrequenzzündung und Einschnüren des Plasmagases mit Hilfe einer gekühlten Düse ein auf das zu schweißende Werkstück gerichteter und von Schutzgas umhüllter Plasmastrahl ausgebildet wird, der die gesamte Werkstückdicke durchstößt, das durch Aufschmelzen des Werkstücks entstehende Schmelzbad zur Seite drückt, wobei durch die Oberflächenspannung der Schmelze ein Durchfallen durch das Stichloch verhindert wird, und die Schmelze hinter der sich bildenden Schweißöse wieder zusammenfliessen und zur Schweißnaht erstarren lässt, wobei über den Plasmabrenner zusätzlich ein Fokussiergas (FG) zugeführt wird, durch das das Plasmagas (PG) weiter eingeschnürt wird, wobei das Plasmagas (PG) und das Fokussiergas (FG) von Schutzgas (SG) umhüllt werden, wobei mindestens ein Gasvolumenstrom während des Schweißvorgangs mehrmals zeitlich verändert wird und/oder als Plasmagas (PG) und/oder als Schutzgas (SG) eine Gasmischung eingesetzt wird, deren Zusammensetzung während des Schweißvorgangs mehrmals zeitlich verändert wird.

Schweißen bezeichnet das unlösbare Verbinden von Bauteilen unter Anwendung von Wärme oder Druck. Dabei können bei den bekannten Schweißverfahren Schweißzusatzwerkstoffe zum Einsatz kommen. Für Metalle werden meist Schmelzschweißverfahren mit Wärmezufuhr eingesetzt. Diese könne jedoch auch beim Schweißen von Glas oder für thermoplastische Kunststoffe angewandt werden.

Beim Schmelzschweißen wird üblicherweise mit örtlich begrenztem Schmelzfluss ohne Anwendung von Kraft geschweißt.

Das Verbinden der Bauteile erfolgt bei den bekannten Verfahren in der Regel in einer Schweißnaht oder in einem Schweißpunkt.

Eine besonders interessante Gruppe der Schweißverfahren stellt das sog. Schutzgasschweißen dar. Das Schutzgasschweißen gliedert sich in mehrere voneinander klar zu trennende, verschiedene Verfahren. Beispielhaft seien hier das Metallschutzgasschweißen (MSG-Schweißen), das Wolfram-Inertgasschweißen und das Plasmaschweißen genannt.

Unter den Schutzgasschweißverfahren nimmt das Plasmaschweißen eine besondere Stellung ein. Das Plasmaschweißen ist mit einer höheren Energiekonzentration verbunden als viele der Konkurrenzverfahren.

Beim Plasmaschweißen dient ein Plasmastrahl als Wärmequelle. Der Plasmastrahl wird durch lonisation und Einschnüren eines Lichtbogens erzeugt. Dieser brennt häufig zwischen einer nichtabschmelzenden negativen (Wolfram-)Elektrode und dem Werkstück als sog. Hauptlichtbogen (direkt übertragener Lichtbogen). Zusätzlich kann für den Zündvorgang zwischen einer nichtabschmelzenden negativen (Wolfram)Elektrode und einer als Düse ausgebildeten Anode ein Pilotlichtbogen eingesetzt werden. Es wird ein auf das Werkstück gerichteter Plasmastrahl ausgebildet, der z.B. entlang eines gewünschten Schweißnahtverlaufs bewegt werden kann. Beispielsweise durch einen die Elektrode konzentrisch umgebenden Plasmabrenner werden bis zu drei Gase oder Gasgemische zugeführt, nämlich das Plasmagas, das Fokussiergas zum Einschnüren des Plasmastrahls und das Schutzgas. Der Volumenstrom jeder Gasart ist dabei zeitlich konstant.

Bei den herkömmlichen Verfahren wird der Plasmastrahl und ggf. das Fokussiergas von Schutzgas umhüllt. Der Einsatz von Schutzgas dient unter anderem dazu, dass die Schmelze während des Schweißvorgangs vor Oxidation geschützt wird.

Das Plasma-Stichlochschweißen stellt eine Variante des Plasmaschweißens dar. Das Plasma-Stichlochschweißen wird bis zu einer Blechdicke von 8 bis 10 mm eingesetzt, nicht jedoch bei einer Belchdicke unter 3 mm. Dieses Verfahren findet hauptsächlich Anwendung im Behälter- und Apparatebau und im Rohrleitungsbau.

Beim Plasma-Stichlochschweißen durchstößt der Plasmastrahl zu Beginn des Schweißvorgangs die gesamte Werkstückdicke. Dabei wird das durch Aufschmelzen des Werkstücks entstehende Schmelzbad vom Plasmastrahl zur Seite gedrückt. Die Oberflächenspannung der Schmelze verhindert ein Durchfallen durch das Stichloch. Stattdessen fließt die Schmelze hinter der sich bildenden Schweißöse wieder zusammen und erstarrt zur Schweißnaht.

In den bekannten Verfahren wird der Schweißstrom (I) entweder konstant gehalten oder es wird mit pulsierendem Schweißstrom geschweißt. In diesem Fall setzt sich jede Periode aus einer Impulsstromphase (Hochstromphase) und einer Grundstromphase (Niedrigstromphase) zusammen.

In der EP 0 689 896 A1 ist ein Plasmaschweißen mit einer sich zyklisch variierende Flussrate des Plasmagases offenbart. Die JP 08039259 beinhaltet ein periodisch varierendes Plasmagas für das Plasmaschweißen. JP 08066774 offenbart ein Verfahren des Plasmastichlochschweißens eines Rohres, bei welchem kreisförmig in Uhrzeigerrichtung gearbeitet wird.

Mit zunehmender Blechdicke reduziert sich die maximal realisierbare Schweißgeschwindigkeit erheblich. Desweiteren ist die sichere und stabile Ausbildung des Stichloches unter praxisrelevanten Bedingungen wie z.B. bei langen Lichtbogenzeiten, unterschiedlichen Belchoberflächen, nicht-optimalem Masseanschluss u.ä. mit Schwierigkeiten verbunden, insbesondere beim Plasma-Stichlochschweißen von Baustahl.

Der vorliegenden Erfindung liegt die Aufgabe zugrunde ein Verfahren zum Plasma-Stichlochschweißen zur Verfügung zu stellen, durch das die Prozesstabilität verbessert und/oder die maximal realisierbare Schweißgeschwindigkeit erhöht wird.

Verfahrensseitig wird die gestellte Aufgabe dadurch gelöst, dass der Fokussiergasvolumenstrom (VS_{FG}) zeitlich verändert wird oder/und die Zusammensetzung des Fokussiergases mehrmals zeitlich verändert wird, wodurch ein zeitlich sich verändernder Staudruck auf die Schmelze ausgeübt wird und dadurch die Schmelze in Schwingung versetzt wird.

Dadurch dass die Schmelze in Schwingung versetzt wird, erhöht sich besonders vorteilhaft die Prozesstabilität beim Zusammenfließen der Schmelze hinter dem Stichloch. Die Kinematik der Stichlochbildung wird mit dem erfindungsgemäßen Verfahren vorteilhaft verändert. Des Weiteren erhöht beispielsweise der durch die zeitliche Veränderung des Gasvolumenstroms pulsierende Plasmastrahl vorteilhaft die maximal realisierbare Schweißgeschwindigkeit, mit besonderem Vorteil ohne die Streckenenergie, d.h. den Energieeintrag in das Werkstück pro Länge der Schweißnaht) signifikant zu erhöhen. Als weiterer Vorteil kann z.B. durch einen zeitlich veränderlichen Gasvolumenstrom des Fokussiergases die Energiedichte des Plasmastrahls variiert werden. Die Änderung der Zusammensetzung des Plasmagases und/oder des Schutzgases erzeugt ebenfalls jeweils für sich alleine einen pulsierenden Plasmastrahl, der die Schmelze in Schwingung versetzt. In Kombination mit der Veränderung des Volumenstroms wird der positive Effekt weiter verstärkt und die Bandbreite der Anpassungsmöglichkeiten des Verfahrens an verschiedene Anwendungsfälle erhöht.

Der Bezug auf eine mehrmalige zeitliche Änderung soll dazu dienen die vorliegende Erfindung von einfachen Aus- und Einschaltvorgängen am Beginn und am Ende eines Schweißprozesses klar abzugrenzen.

Bevorzugt werden der Plasmagasvolumenstrom und der Fokussiergasvolumenstrom zeitlich verändert. Beides kann mit oder ohne eine zeitliche Veränderung des Schutzgasvolumenstroms durchgeführt werden.

Gemäß einer vorteilhaften Ausgestaltung der Erfindung enthält das Plasmagas und/oder das Fokussiergas und/oder das Schutzgas mindestens ein Gas aus der Gruppe von Argon, Helium, Stickstoff und Wasserstoff enthält. Bevorzugt werden demnach als Plasmagas und/oder als Fokussiergas und/oder als Schutzgas Gase oder Gasgemische verwendet, die mindestens ein Gas aus der genannten Gruppe enthalten. Die Festlegung des geeigneten Gases bzw. des geeigneten Gasgemisches erfolgt in Abhängigkeit von der Schweißaufgabe, besonders unter Berücksichtigung des zu schweißenden Grundwerkstoffs und etwaiger Zusatzwerkstoffe. Es kommen sowohl die Reingase als auch Zwei-, Drei- und Mehr-Komponenten-Gemische vorteilhaft zum Einsatz. In vielen Fällen haben sich auch dotierte Gasgemische als besonders vorteilhaft erwiesen, wobei dotierte Gasgemische Dotierungen mit aktiven Gasen im vpm-Bereich aufweisen, d.h. die Dotierung erfolgt bevorzugt im Bereich von weniger als 2,5 Volumenprozent, meist weniger als 0,1 Volumenprozent. Als Dotiergase können aktive Gase wie z.B. Sauerstoff, Kohlendioxid, Stickstoffmonoxid, Lachgas (Distickstoffmonoxid) oder Stickstoff eingesetzt werden.

Bevorzugt werden der Heliumanteil und/oder der Wasserstoffanteil in der Gasmischung zeitlich verändert. Dabei sind hier das Plasmagas und/oder das Fokussiergas und/oder das Schutzgas als Gasmischung angesprochen.

Gemäß einer besonders vorteilhaften Weiterbildung der Erfindung werden die zeitlichen Änderungen synchron durchgeführt. Beispielsweise werden der Plasmagasvolumenstrom (VPG) und der Fokussiergasvolumenstrom (VFG) synchron zueinander zeitlich verändert. Alternativ oder zusätzlich können die Zusammensetzungen des Plasmagases (PG) und des Fokussiergases (FG) synchron zueinander zeitlich verändert werden. Gemäß einer besonders vorteilhaften Ausgestaltung kann die Zusammensetzung des Plasmagases (PG) und des Fokussiergases (FG) synchron zur Änderung der Zusammensetzung des Schutzgases (SG) zeitlich verändert werden.

Gemäß einer anderen vorteilhaften Weiterbildung der Erfindung werden die zeitlichen Änderungen zueinander phasenverschoben durchgeführt. Beispielsweise werden der Plasmagasvolumenstrom (VPG) und der Fokussiergasvolumenstrom (VFG) zueinander phasenverschoben zeitlich verändert. Alternativ oder zusätzlich können die Zusammensetzungen des Plasmagases (PG) und des Fokussiergases (FG) zueinander phasenverschoben zeitlich verändert werden.

Eine weitere zweckmäßige Ausgestaltung der Erfindung sieht vor, dass mit pulsierendem Schweißstrom (Impulsstrom) geschweißt wird, wobei jede Periode aus einer Impulsstromphase (Hochstromphase) und einer Grundstromphase (Niedrigstromphase) zusammengesetzt wird. Beim Schweißen mit pulsierendem Schweißstrom (Impulsstrom) kann mit besonderem Vorteil der Plasmagasvolumenstrom (V_{PG}) und/oder der Fokussiergasvolumenstrom (V_{FG}) synchron oder phasenverschoben zum Impulsstromverlauf zeitlich verändert werden.

Es kann jedoch für bestimmte Anwendungen auch besonders vorteilhaft sein mit Konstantstrom anstatt mit Impulsstrom zu schweißen.

Beim Schweißen mit Impusstrom werden der Plasmagasvolumenstrom und/oder der Fokussiergasvolumenstrom und/oder die Zusammensetzung des Plasmagases und/oder des Fokussiergases bevorzugt synchron zum Imputsstromverlauf zeitlich verändert.

Gemäß einer anderen vorteilhaften Ausgestaltung der Erfindung werden der Plasmagasvolumenstrom und/oder der Fokussiergasvolumenstrom und/oder die Zusammensetzung des Plasmagases und/oder des Fokussiergases zum Impulsstromverlauf phasenverschoben zeitlich verändert.

Zweckmäßigerweise wird die zeitliche Veränderung des Volumenstroms und/oder der Zusammensetzung zumindest zum Teil durch ein Rechteckprofil dargestellt.

Mit besonderem Vorteil verläuft die zeitliche Veränderung des Volumenstroms und/oder der Zusammensetzung nach einem modifizierten Rechteckprofil, das abgeschrägte Schultern aufweist.

Eine andere vorteilhafte Ausgestaltung der Erfindung sieht vor, dass die zeitliche Veränderung des Volumenstroms und/oder der Zusammensetzung zumindest zum Teil durch ein Dreieckprofil oder ein sinusförmiges Profil dargestellt wird.

Durch geeignete Wahl der Kombinationsmöglichkeiten der erfindungsgemäßen Ausgestaltungen kann der Schweißprozess mit besonderem Vorteil aufgabenspezifisch optimiert werden.

Zum Beispiel kann mit besonderem Vorteil einem niederfrequenten Impuls des Gasvolumenstroms des Plasma- und/oder des Fokussiergases (z.B. 1-100 Hz) in der Hochphase oder in der Niedrigphase ein hochfrequentes Pusieren des Plasma-und/oder des Fokussiergases (100 - 8000 Hz) überlagert werden.

Die Erfindung bietet eine ganze Reihe von Vorteilen, von denen im Folgenden nur einige beispielhaft genannt werden:
Dadurch dass die Schmelze in Schwingung versetzt wird, erhöht sich besonders vorteilhaft die Prozesstabilität beim Zusammenfließen der Schmelze hinter dem Stichloch.

Durch geeignete Wahl der Kombinationsmöglichkeiten der erfindungsgemäßen Ausgestaltungen kann der Schweißprozess mit besonderem Vorteil aufgabenspezifisch optimiert werden.

Die Erfindung sowie weitere Ausgestaltungen der Erfindung werden im Folgenden anhand der in den Figuren dargestellten Ausführungsbeispiele näher erläutert. Im Einzelnen zeigen die Figuren
- Figur 1: ein Beispiel für eine jeweils phasenverschobene zeitliche Änderung des Plasmagasvolumenstroms und des Fokussiergasvolumenstroms bei einem gepulsten Schweißstrom,
- Figur 2: ein Beispiel für eine synchrone zeitliche Änderung des Plasmagasvolumenstroms und des Fokussiergasvolumenstroms bei einem gepulsten Schweißstrom.
- Figur 3: ein Beispiel für eine synchrone zeitliche Änderung der Zusammensetzung des Plasmagases und des Fokussiergases bei einem gepulsten Schweißstrom und bei zusätzlich sychroner Änderung der Zusammensetzung des Schutzgases,
- Figur 4: ein Beispiel für eine zueinander synchrone zeitliche Änderung der Zusammensetzung des Plasmagases, des Fokussiergases und des Schutzgases, die zu einem gepulsten Schweißstrom phasenversetzt durchgeführt wird.

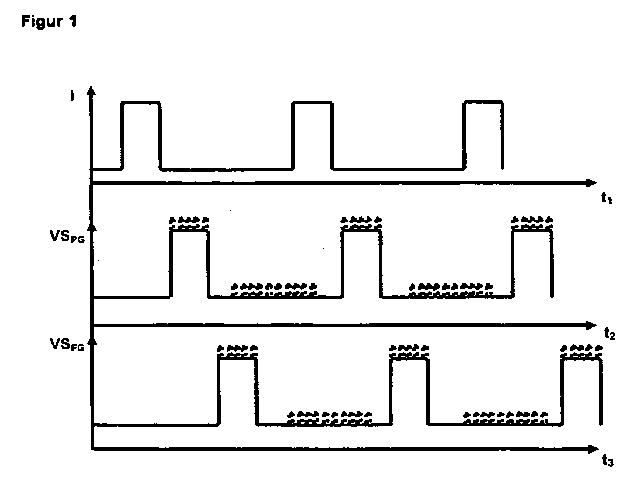

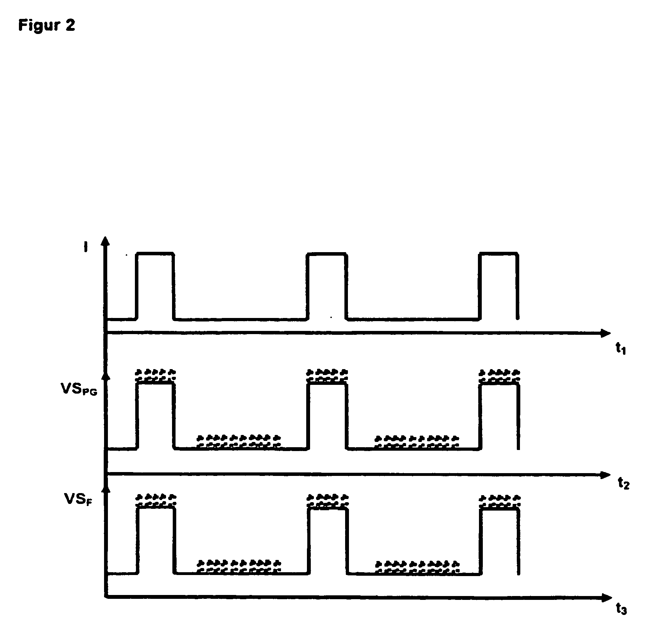

In den Figuren 1 und 2 ist auf der x-Achse der Darstellungen die Zeit angetragen. In y-Richtung sind im Einzelnen folgende Größen angetragen: Schweißstrom I, Plasmagasvolumenstrom VS_{PG} und Fokussiergasvolumenstrom VS_{FG}.

In beiden Figuren sind den sog. großen, niederfrequenten Pulsen des Plasmagasvolumenstroms VS_{PG} und des Fokussiergasvolumenstroms VS_{FG} mit ausgeprägter Amplitude sog. kleine, hochfrequente Pulse mit kleiner Amplitude überlagert. Diese Ausgestaltung ist besonders vorteilhaft.

In der Figur 2 sind alle gezeigten Amplitudenänderungen zueinander synchron. Die Figuren 1 und 2 sind als schematische Beispiele für die beschriebenen zeitlichen Änderungen des Gasvolumenstroms zu betrachten. Die Formen für die Verläufe von Schweißstrom, Plasmagasvolumenstrom und Fokussiergasvolumenstrom sind hier nur schematisch angegeben. Sie können den aufgabenspezifischen Anforderungen von konkreten Schweißaufgaben Rechnung tragende Anstiegsgeschwindigkeiten, Abfallgeschwindigkeiten, Zwischenimpulse und Schultern (z.B. beim Übergang von der Hochphase zur Niedrigphase) aufweisen.

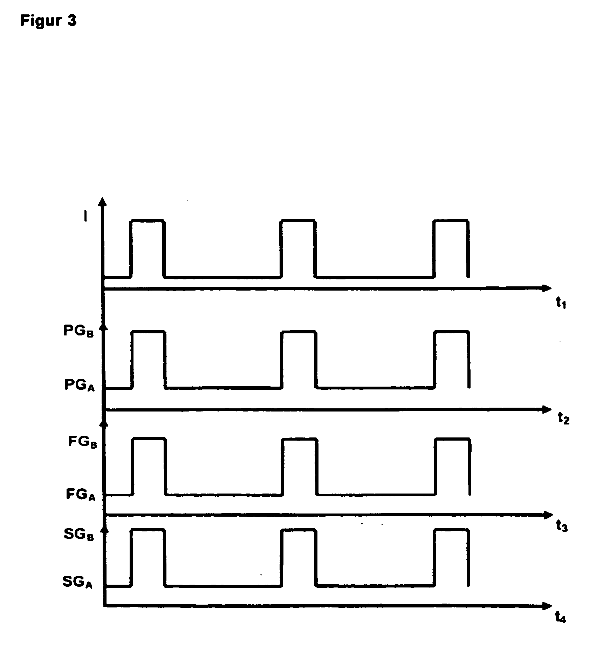

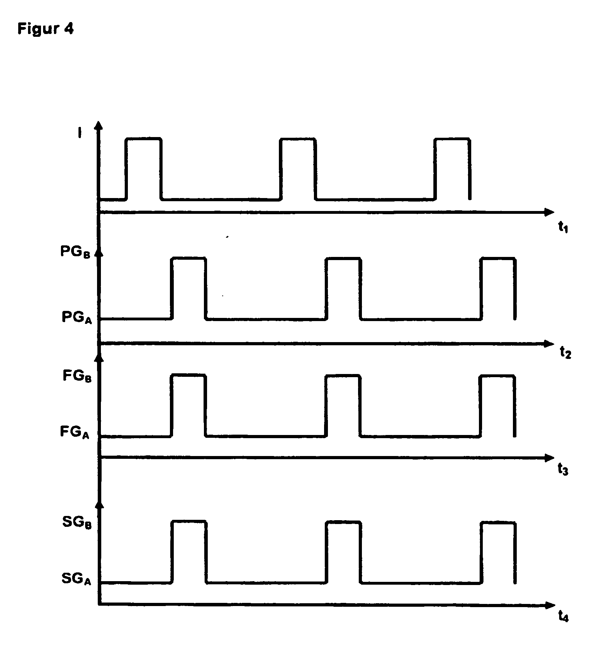

In den Figuren 3 und 4 ist auf der x-Achse der Darstellungen die Zeit angetragen. In y-Richtung sind im Einzelnen folgende Größen angetragen: Schweißstrom I, Plasmagaszusammensetzung, Fokussiergaszusammensetzung und Schutzgaszusammensetzung, wobei die letzten drei Größen bei ihrer Veränderung über die Zeit jeweils einen mit B bezeichneten Wert als (relatives) Maximum und einen mit A bezeichneten Wert als (relatives) Minimum annehmen. Es wird also in diesem Beispiel für jede der drei Größen im Wesentlichen mit zwei verschiedenen Zusammensetzungen gearbeitet. Selbstverständlich liegen auch weitere, kompliziertere Wechsel zwischen mehreren verschiedenen Zusammensetzungen im Rahmen der Erfindung.

In der Figur 3 sind alle gezeigten Amplitudenänderungen zueinander synchron.

Die in der Figur 3 und in der Figur 4 gezeigte synchrone Änderung der Zusammensetzung des Schutzgases ist besonders vorteilhaft zur Vermeidung einer unkontrollierten Entmischung und einer daraus möglicherweise entstehenden Verwirbelung der Gasströme, die bei manchen Anwendungsfällen und bei Einsatz eines konstant zusammengesetzten Schutzgases auftreten könnten.

Die Figuren 3 und 4 sind als schematische Beispiele für die beschriebenen zeitlichen Änderungen des Gasvolumenstroms zu betrachten. Die Formen für die Verläufe von Schweißstrom, Plasmagasvolumenstrom und Fokussiergasvolumenstrom sind hier nur schematisch angegeben. Sie können den aufgabenspezifischen Anforderungen von konkreten Schweißaufgaben Rechnung tragende Anstiegsgeschwindigkeiten, Abfallgeschwindigkeiten, Zwischenimpulse und Schultern (z.B. beim Übergang von der Hochphase zur Niedrigphase) aufweisen.

## Patentansprüche

1. Verfahren zum Plasma-Stichlochschweißen bei dem eine nichtabschmelzende und von einem Plasmabrenner konzentrisch umgebene Elektrode eingesetzt wird, wobei über den Plasmabrenner zumindest ein Plasmagas (PG) und ein Schutzgas (SG) zugeführt werden, wobei durch Ionisation des Plasmagases mit Hilfe eines Pilotlichtbogens oder einer Hochfrequenzzündung und Einschnüren des Plasmagases mit Hilfe einer gekühlten Düse ein auf das zu schweißende Werkstück gerichteter und von Schutzgas (SG) umhüllter Plasmastrahl ausgebildet wird, der die gesamte Werkstückdicke durchstößt, das durch Aufschmelzen des Werkstücks entstehende Schmelzbad zur Seite drückt, wobei durch die Oberflächenspannung der Schmelze ein Durchfallen durch das Stichloch verhindert wird, und die Schmelze hinter der sich bildenden Schweißöse wieder zusammenfliessen und zur Schweißnaht erstarren lässt, wobei über den Plasmabrenner zusätzlich ein Fokussiergas (FG) zugeführt wird, durch das das Plasmagas (PG) weiter eingeschnürt wird, wobei das Plasmagas (PG) und das Fokussiergas (FG) von Schutzgas (SG) umhüllt werden, wobei mindestens ein Gasvolumenstrom während des Schweißvorgangs mehrmals zeitlich verändert wird und/oder als Plasmagas (PG) und/oder als Schutzgas (SG) eine Gasmischung eingesetzt wird, deren Zusammensetzung während des Schweißvorgangs mehrmals zeitlich verändert wird **dadurch gekennzeichnet, dass** der Fokussiergasvolumenstrom (VS_{FG}) zeitlich verändert wird oder/und die Zusammensetzung des Fokussiergases mehrmals zeitlich verändert wird, wodurch ein zeitlich sich verändernder Staudruck auf die Schmelze ausgeübt wird und **dadurch** die Schmelze in Schwingung versetzt wird.

2. Verfahren nach Anspruch 1, **dadurch gekennzeichnet, dass** der Plasmagasvolumenstrom (VS_{PG}) und/oder der Schutzgasvotumenstrom (VS_{SG}) zeitlich verändert werden.

3. Verfahren nach Anspruch 1 oder 2, **dadurch gekennzeichnet, dass** das Plasmagas (PG) und/oder das Fokussiergas (FG) und/oder das Schutzgas (SG) mindestens ein Gas aus der Gruppe von Argon, Helium, Stickstoff und Wasserstoff enthält.

4. Verfahren nach einem der Ansprüche 1 bis 4, **dadurch gekennzeichnet, dass** der Heliumanteil und/oder der Wasserstoffanteil in der Gasmischung zeitlich verändert werden.

5. Verfahren nach einem der Ansprüche 1 bis 4, **dadurch gekennzeichnet, dass** die zeitlichen Änderungen synchron zueinander durchgeführt werden.

6. Verfahren nach einem der Ansprüche 1 bis 5, **dadurch gekennzeichnet, dass** die zeitlichen Änderungen zueinander phasenverschoben durchgeführt werden.

7. Verfahren nach einem der Ansprüche 1 bis 6, **dadurch gekennzeichnet, dass** mit pulsierendem Schweißstrom (Impulsstrom) geschweißt wird, wobei jede Periode aus einer Impulsstromphase (Hochstromphase) und einer Grundstromphase (Niedrigstromphase) zusammengesetzt wird.

8. Verfahren nach Anspruch 7, **dadurch gekennzeichnet, dass** der Plasmagasvolumenstrom (VPG) und/oder der Fokussiergasvolumenstrom (VFG) und/oder die Zusammensetzung des Plasmagases und/oder des Fokussiergases synchron zum Impulsstromverlauf zeitlich verändert werden.

9. Verfahren nach Anspruch 7, **dadurch gekennzeichnet, dass** der Plasmagasvolumenstrom (VPG) und/oder der Fokussiergasvolumenstrom (VFG) und/oder die Zusammensetzung des Plasmagases und/oder des Fokussiergases zum Impulsstromverlauf phasenverschoben zeitlich verändert werden.

10. Verfahren nach einem der Ansprüche 1 bis 9, **dadurch gekennzeichnet, dass** die zeitliche Veränderung des Gasvolumenstroms und/oder der Zusammensetzung zumindest zum Teil durch ein Rechteckprofil dargestellt wird.

## Claims

1. Method for plasma keyhole welding in which a non-consumable electrode concentrically surrounded by a plasma torch is used, wherein at least one plasma gas (PG) and a shielding gas (SG) are fed over the plasma torch, wherein a plasma jet that is directed towards the workpiece to be welded and is enclosed by shielding gas (SG) is formed by ionization of the plasma gas with the aid of a pilot arc or a high-frequency ignition and constriction of the plasma gas with the aid of a cooled nozzle, which plasma jet penetrates the entire thickness of the workpiece and forces aside the melt bath produced by melting of the workpiece, wherein collapsing through the keyhole is prevented by the surface tension of the melt, and the melt can be made to converge again and solidify to form the weld seam behind the keyholing, wherein a focusing gas (FG) is additionally fed over the plasma torch, having the effect of further constricting the plasma gas (PG), wherein the plasma gas (PG) and the focusing gas (FG) are enclosed by shielding gas (SG), wherein at least one volumetric flow of gas is changed repeatedly over time during the welding operation and/or a gas mixture of a composition that is repeatedly changed over time during the welding operation is used as plasma gas (PG) and/or as shielding gas (SG), **characterized in that** the volumetric flow of focusing gas (VS_{FG}) is changed over time and/or the composition of the focusing gas is repeatedly changed over time, whereby a dynamic pressure that changes over time is exerted on the melt and the melt is thereby made to oscillate.

2. Method according to Claim 1, **characterized in that** the volumetric flow of plasma gas (VS_{PG}) and/or the volumetric flow of shielding gas (VS_{SG}) is changed over time.

3. Method according to Claim 1 or 2, **characterized in that** the plasma gas (PG) and/or the focusing gas (FG) and/or the shielding gas (SG) contains at least one gas from the group comprising argon, helium, nitrogen and hydrogen.

4. Method according to one of Claims 1 to 3, **characterized in that** the helium fraction and/or the hydrogen fraction in the gas mixture is changed over time.

5. Method according to one of Claims 1 to 4, **characterized in that** the changes over time are performed synchronously in relation to one another.

6. Method according to one of Claims 1 to 5, **characterized in that** the changes over time are performed out of phase in relation to one another.

7. Method according to one of Claims 1 to 6, **characterized in that** welding is performed with a pulsating welding current (pulsed current), wherein each period is made up of a pulsed current phase (high current phase) and a background current phase (low current phase).

8. Method according to Claim 7, **characterized in that** the volumetric flow of plasma gas (VPG) and/or the volumetric flow of focusing gas (VFG) and/or the composition of the plasma gas and/or of the focusing gas are changed over time synchronously in relation to the variation in pulsed current.

9. Method according to Claim 7, **characterized in that** the volumetric flow of plasma gas (VPG) and/or the volumetric flow of focusing gas (VFG) and/or the composition of the plasma gas and/or of the focusing gas is changed over time out of phase in relation to the variation in pulsed current.

10. Method according to one of Claims 1 to 9, **characterized in that** the change over time of the volumetric flow of gas and/or of the composition is at least partly represented by a square wave profile.

## Revendications

1. Procédé de soudage au plasma en bouchon, dans lequel on utilise une électrode non fusible et entourée de façon concentrique par un brûleur au plasma, dans lequel on amène au moins un gaz plasma (PG) et un gaz protecteur (SG) au moyen du brûleur au plasma, dans lequel on forme un jet de plasma entouré de gaz protecteur (SG) et dirigé vers la pièce à souder par ionisation du gaz plasma à l'aide d'un arc électrique pilote ou d'un allumage à haute fréquence et étranglement du gaz plasma à l'aide d'une tuyère refroidie, jet qui passe à travers toute l'épaisseur de la pièce et écarte le bain fondu produit par la fusion de la pièce, dans lequel on empêche une chute à travers le trou percé grâce à la tension superficielle du bain fondu et on laisse de nouveau le bain fondu se rassembler derrière l'oeil de soudage qui se forme et on le laisse se solidifier en un cordon de soudure, dans lequel on amène en plus un gaz de focalisation (FG) au moyen du brûleur au plasma, par lequel le gaz plasma (PG) est de nouveau étranglé, dans lequel on entoure le gaz plasma (PG) et le gaz de focalisation (FG) avec du gaz protecteur (SG), dans lequel on modifie plusieurs fois temporellement au moins un débit volumique de gaz pendant l'opération de soudage et/ou on utilise comme gaz plasma (PG) et/ou comme gaz protecteur (SG) un mélange de gaz dont on modifie plusieurs fois temporellement la composition pendant l'opération de soudage, **caractérisé en ce que** l'on modifie temporellement le débit volumique de gaz de focalisation (VS_{FG}) et/ou on modifie plusieurs fois temporellement la composition du gaz de focalisation, ce qui permet d'exercer sur le bain fondu une pression dynamique qui varie temporellement et de mettre ainsi le bain fondu en vibration.

2. Pression selon la revendication 1, **caractérisé en ce que** l'on modifie temporellement le débit volumique de gaz plasma (VS_{PG}) et/ou le débit volumique de gaz protecteur (VS_{SG}).

3. Procédé selon la revendication 1 ou 2, **caractérisé en ce que** le gaz plasma (PG) et/ou le gaz de focalisation (FG) et/ou le gaz protecteur (SG) contient au moins un gaz du groupe comprenant l'argon, l'hélium, l'azote et l'hydrogène.

4. Procédé selon l'une quelconque des revendications 1 à 3, **caractérisé en ce que** l'on modifie temporellement la proportion d'hélium et/ou la proportion d'hydrogène dans le mélange de gaz.

5. Procédé selon l'une quelconque des revendications 1 à 4, **caractérisé en ce que** l'on effectue les modifications temporelles de façon synchrone l'une par rapport à l'autre.

6. Procédé selon l'une quelconque des revendications 1 à 5, **caractérisé en ce que** l'on effectue les modifications temporelles de façon déphasée l'une par rapport à l'autre.

7. Procédé selon l'une quelconque des revendications 1 à 6, **caractérisé en ce que** l'on soude avec un courant de soudage pulsé (courant pulsé), dans lequel chaque période est composée d'une phase de courant pulsé (phase de courant fort) et d'une phase de courant de base (phase de courant faible).

8. Procédé selon la revendication 7, **caractérisé en ce que** l'on modifie temporellement le débit volumique de gaz plasma (VPG) et/ou le débit volumique de gaz de focalisation (VFG) et/ou la composition du gaz plasma et/ou du gaz de focalisation de façon synchrone avec l'allure du courant pulsé.

9. Procédé selon la revendication 7, **caractérisé en ce que** l'on modifie temporellement le débit volumique de gaz plasma (VPG) et/ou le débit volumique de gaz de focalisation (VFG) et/ou la composition du gaz plasma et/ou du gaz de focalisation de façon déphasée par rapport à l'allure du courant pulsé.

10. Procédé selon l'une quelconque des revendications 1 à 9, **caractérisé en ce que** l'on représente la modification temporelle du débit volumique de gaz et/ou de la composition au moins en partie par un profil rectangulaire.
